# EUROPÄISCHE PATENTSCHRIFT

(11) **EP 1 384 985 B1**
(45) Veröffentlichungstag und Bekanntmachung des Hinweises auf die Patenterteilung: **14.02.2007**
(21) Anmeldenummer: 03015071.8
(22) Anmeldetag: 03.07.2003
(51) Int. Cl.: G01M 3/28

(54) **Prüfeinrichtung zur automatisierten Prüfung von Schutzkappen für Bremszylinder von Scheibenbremsen**
Testing device for automatically testing protection-caps for the brake-cylinder of a disc-brake
Dispositif d'essai pour tester automatiquement l'intégrité d'un soufflet protecteur du cylindre d'un frein à disque

(30) Priorität: 24.07.2002 AT 11182002
(43) Veröffentlichungstag der Anmeldung: 28.01.2004
(73) Patentinhaber: DÄTWYLER AG SCHWEIZERISCHE KABEL-, GUMMI- UND KUNSTSTOFFWERKE, 6467 Schattdorf (CH)
(72) Erfinder: Lenzner, Horst, Dipl.-Ing., 6467 Schattdorf (CH); Stiefel, Dieter, Dipl.-Ing., 6460 Altdorf (CH); Weiler, Rolf, Dipl.-Ing., 65817 Eppstein Tns. (DE); Heiderich, Stephan, Dipl.-Ing., 64572 Büttelborn (DE)
(74) Vertreter: Hofmann, Ralf U.

(56) Entgegenhaltungen:
- GB-A- 2 261 267
- US-A- 4 527 804
- US-A- 5 458 344

## Beschreibung

Die Erfindung betrifft eine Prüfeinrichtung zur automatisierten Prüfung von Schutzkappen für Bremszylinder von Scheibenbremsen, wobei die Schutzkappe einen Balg, einen in einer Ringnut im Kolben des Bremszylinders eingreifenden Befestigungswulst an einem ersten Ende des Balgs und ein am zweiten Ende des Balgs angeordnetes Anschlußstück zur Festlegung der Schutzkappe am Zylindergehäuse besitzt und wobei die Prüfeinrichtung einen Prüfadapter mit einem Adapterunterteil zum Einlegen der Schutzkappe und einen in das Adapterunterteil mit der darin eingelegten Schutzkappe einfahrbaren Adapterstempel aufweist, der eine Außenwand mit einer an eine erste am Anschlußstück angeordnete Dichtzone anlegbaren ersten Dichtfläche und einer an eine an der Innenseite des ringförmigen Befestigungswulstes angeordneten zweiten Dichtzone anlegbaren zweiten Dichtfläche besitzt, und zur Dichtigkeitsprüfung der Dichtzonen mittels einer Druckluftzufuhrleitung eine Druckdifferenz zwischen den Räumen aufbringbar ist, welche an beiden Seiten einer jeweiligen an einer der Dichtflächen anliegenden Dichtzone an diese angrenzen.

Eine Schutzkappe der genannten Art zur Verhinderung des Eindringens von Verschmutzungen in die Zylinderbohrung des Zylindergehäuses des Bremszylinders ist beispielsweise aus der DE-OS 41 27 830 bekannt. Eine solche Schutzkappe wird einerseits mittels des Befestigungswulstes in einer Ringnut im aus der Zylinderbohrung herausstehenden Teil des Kolbens und andererseits mittels des Anschlußstücks am Zylindergehäuse festgelegt. Zur automatisierten Prüfung von solchen Schutzkappen sind Prüfeinrichtungen der eingangs genannten Art bekannt. Hierbei wird die Schutzkappe in das Adapterunterteil eines Prüfadapters eingelegt und anschließend wird der Adapterstempel in die in das Adapterunterteil eingelegte Schutzkappe eingefahren, wobei sich eine erste Dichtfläche des Adapterstempels an eine am Anschlußstück angeordnete erste Dichtzone und eine zweite Dichtfläche des Adapterstempels an eine zweite, an der Innenseite des Befestigungswulstes angeordnete Dichtzone anlegen. In der Folge wird in den von den beiden Dichtzonen begrenzten Raum mittels einer Druckluftzufuhrleitung ein Überdruck angebracht, wobei in den auf den anderen Seiten dieser beiden Dichtzonen liegenden Räumen Umgebungsdruck herrscht. In der Druckzufuhrleitung wird nun ein Absperrventil geschlossen und mittels eines Drucksensors wird der Druckverlauf gemessen. Falls an der ersten und/oder zweiten Dichtzone ein Defekt vorliegt, kommt es zu einem Druckabfall und die betroffene Schutzkappe wird ausgeschieden.

Es hat sich gezeigt, daß nicht alle Schutzkappen, welche eine Prüfung mit einer solche Prüfeinrichtung bestanden haben, praxistauglich sind. Dies trifft insbesondere als tiefgezogene und gewalzte Teile ausgebildete Kolben von Bremszylindern zu, wie sie heute häufig eingesetzt werden. Im Gegensatz zu gedrehten Kolben weisen bei diesen Kolben die Ringnuten zur Einlegung des Befestigungswulstes größere Toleranzen in ihren Abmessungen auf und die Nutflanken können leicht konisch ausgebildet sein.

Aufgabe der Erfindung ist es, eine verbesserte Prüfeinrichtung der eingangs genannten Art bereitzustellen, durch welche die Funktionssicherheit der Schutzkappen, welche die Prüfung bestanden haben, in einem erhöhten Maß gewährleistet ist. Erfindungsgemäß gelingt dies durch eine Prüfeinrichtung mit den Merkmalen des Anspruchs 1.

Durch eine erfindungsgemäße Prüfeinrichtung kann somit ein weiterer Bereich der Wand des Befestigungswulstes geprüft werden, welcher eine weitere Dichtzone bilden kann. Diese weitere Dichtzone des Befestigungswulstes kann eine Abdichtfunktion gegenüber der Ringnut zusätzlich oder anstelle der an der Innenseite der Befestigungswulst liegenden Dichtzone übernehmen, beispielsweise wenn der Befestigungswulst nicht ganz am Nutboden anliegt. Es ist hierbei keine Überführung der Schutzkappe in eine zusätzliche Prüfstation erforderlich, wodurch der Prüfvorgang auch wesentlich zeitaufwendiger werden würde.

In einem ersten Ausführungsbeispiel der Erfindung ist vorgesehen, daß die am Anschlußstück angeordnete erste Dichtzone und die am Befestigungswulst angeordneten zweiten und dritten Dichtzonen gleichzeitig an den zugehörigen Dichtflächen des Adapterstempels anliegen. Es kann hierbei in vorteilhafter Weise eine einstufige Prüfung aller dieser Dichtzonen erfolgen.

In einem anderen Ausführungsbeispiel kann vorgesehen sein, daß in einer ersten Prüfstellung des Adapterstempels zunächst die an der Innenseite des Befestigungswulsts angeordnete zweite Dichtzone an der zugehörigen Dichtfläche anliegt, während die an der Seitenfläche des Dichtwulsts angeordnete dritte Dichtzone von der zugehörigen Dichtfläche noch beabstandet ist und in den von der ersten und der zweiten Dichtzone begrenzten Raum mittels der Druckluftzufuhrleitung ein Überdruck eingebracht ist. Weiters ist in diesem Ausführungsbeispiel eine zweite Prüfstellung des Adapterstempels vorgesehen, bei welchem die an der Seitenfläche des Ringwulstes angeordnete dritte Dichtzone an der zugehörigen Dichtfläche anliegt und im von der ersten und der dritten Dichtzone begrenzten Raum mittels der Druckluftzufuhrleitung ein Überdruck eingebracht ist, während der Raum zwischen der zweiten und der dritten Dichtzone mittels der in diesen Raum führenden Leitung auf Umgebungsdruck gebracht ist. Die Prüfung der Schutzkappe erfolgt bei diesem Ausführungsbeispiel somit in zwei Stufen entsprechend zwei Hüben des Adapterstempels aber in einer einzigen Prüfstation.

Weitere Vorteile und Einzelheiten der Erfindung werden im folgenden anhand der beiliegenden Zeichnung erläutert. In dieser zeigen:

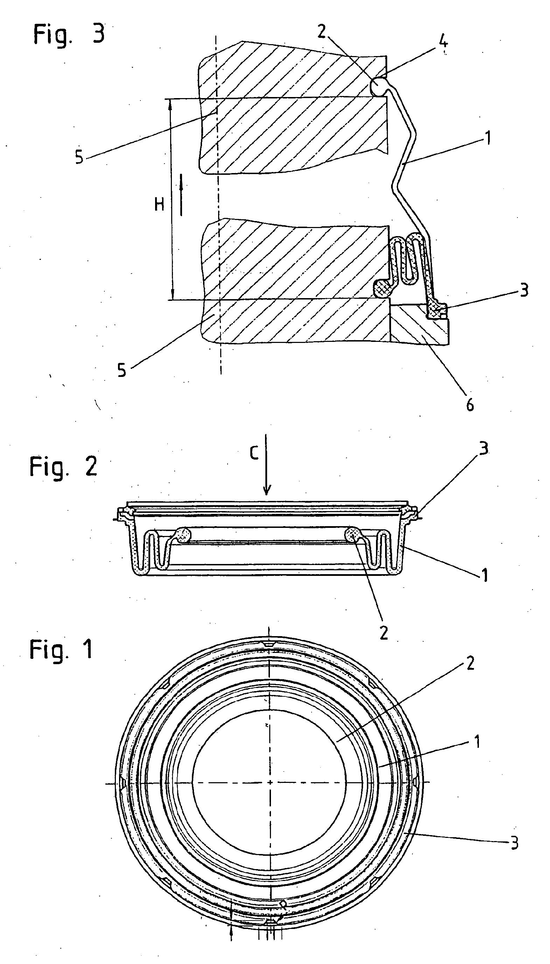

- Fig. 1: die Schutzkappe in Ansicht (Blickrichtung C in Fig. 2);
- Fig. 2: einen Umfangsabschnitt der Schutzkappe in Seitenansicht;
- Fig. 3: die an einem Bremszylinder angebrachte Schutzkappe bei zwei unterschiedlichen Hüben des Kolbens des Bremszylinders;
- Fig. 4: eine schematische Darstellung einer erfindungsgemäßen Prüfeinrichtung im geöffneten Zustand des Prüfadapters;
- Fig. 5: eine Draufsicht auf den Prüfadapter;
- Fig. 6: einen Schnitt entlang der Linie AA von Fig. 5 (mit eingelegter Schutzkappe);
- Fig. 7: einen Schnitt entlang der Linie BB von Fig. 5;
- Fig. 8: ein vergrößertes Detail D von Fig. 7;
- Fig. 9: eine vergrößerte Teildarstellung eines weiteren Ausführungsbeispiels einer erfindungsgemäßen Einrichtung (in einem Fig. 6 entsprechenden Schnitt), in der ersten Prüfstellung des Adapterstempels und
- Fig. 10: einen Fig. 9 entsprechenden Schnitt in der zweiten Prüfstellung des Adapterstempels.

Die in den Fig. dargestellte Schutzkappe weist einen im Querschnitt ringförmigen Balg 1, einen an einem ersten Ende des Balgs 1 angebrachten ringförmigen Befestigungswulst 2 und ein am zweiten Ende des Balges 1 angebrachtes Anschlußstück 3 auf. Der Befestigungswulst 2 ist zum Eingriff in einer Ringnut 4 im Kolben 5 des Bremszylinders vorgesehen. Das Anschlußstück 3 dient zur Festlegung der Schutzkappe am Zylindergehäuse 6 des Bremszylinders. In Fig. 3 sind die vollständig eingefahrene und die vollständig ausgefahrene Position des Kolbens 5 dargestellt, der somit insgesamt um einen Hub H ausfahrbar ist. Der Befestigungswulst 2 ist gegenüber der Ringnut 4 und das Anschlußstück 3, welches einen einvulkanisierten Klemmring 7 (Fig. 2) aufweist, ist gegenüber dem Zylindergehäuse abgedichtet.

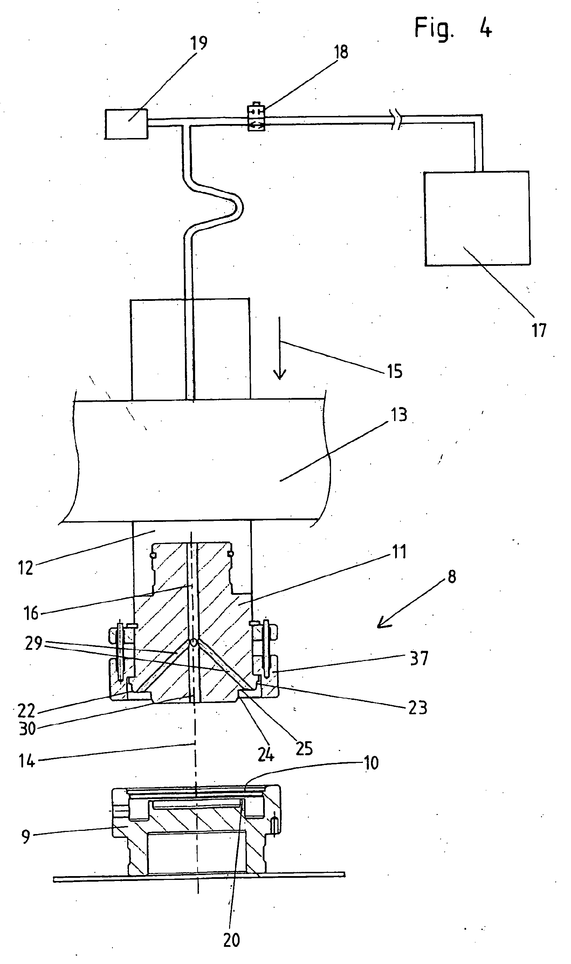

Ein Ausführungsbeispiel einer erfindungsgemäßen Prüfeinrichtung ist in Fig. 4 dargestellt, wobei nur der erfindungswesentliche Prüfadapter 8 in größerem Detail dargestellt ist, während die anderen dargestellten Teile der Prüfeinrichtung, die in herkömmlicher Weise ausgebildet sein können, stark schematisiert sind. Der Prüfadapter 8 besitzt ein Adapterunterteil 9 mit einer Aufnahme 10 zum Einlegen einer zu prüfenden Schutzkappe und einen Adapterstempel 11. Der Adapterstempel 11 wird von einem Anschlußstück 12 getragen, das gegenüber einem Führungsteile 13 in Richtung der Längsachse 14 des Prüfadapters 8 verstellbar gelagert ist. Die Stelleinheit ist in Fig. 4 nicht im einzelnen dargestellt und kann in herkömmlicher Weise ausgebildet sein, beispielsweise in Form einer Kolbenzylinder-Einheit. In Fig. 4 ist der geöffnete Zustand des Prüfadapters dargestellt. Durch eine Verschiebung des Anschlußstücks 12 in Richtung des Pfeils 15 wird der Prüfadapter nach Einlegen einer Schutzkappe geschlossen.

Mittels einer Druckluftzufuhrleitung 16 ist aus einem in Fig. 4 schematisch dargestellten Reservoir 17 Druckluft in den Prüfbereich des Prüfadapters zuführbar. In der Druckluftzufuhrleitung 16 ist ein ansteuerbares Ventil 18 angeordnet. Im vom Ventil 18 absperrbaren Bereich ist weiters ein Druckaufnehmer 19 vorgesehen.

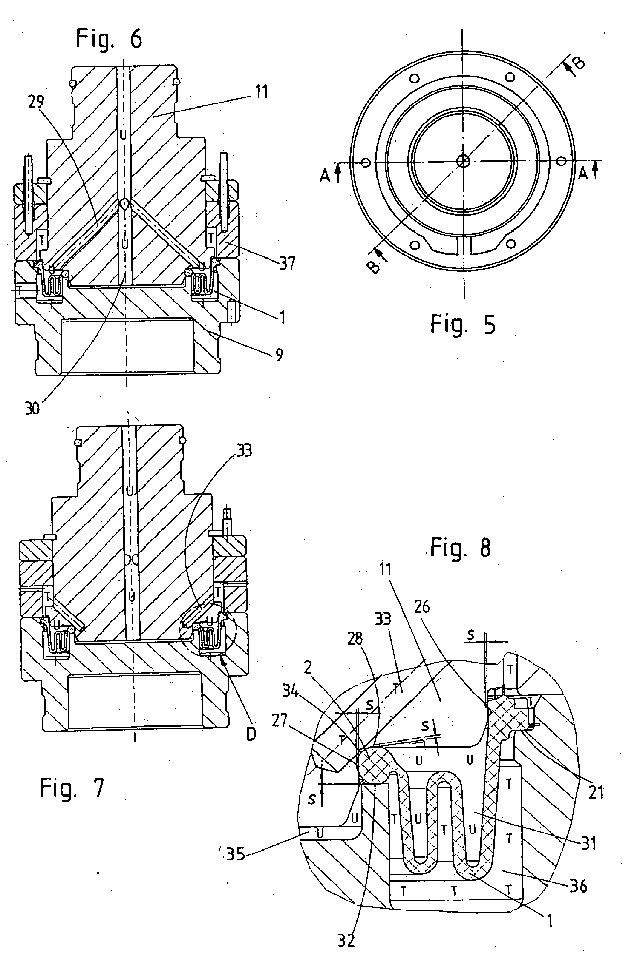

In den Fig. 6 bis 8 ist der geschlossene Prüfadapter 8 mit einer darin eingelegten Schutzkappe dargestellt. Der Befestigungswulst 2 und das Anschlußstück 3 liegen auf Auflageflächen 20, 21 des Adapterunterteils 9 auf. Die Außenwand 22 des Adapterstempels 11 (vgl. Fig. 4) weist erste, zweite und dritte Dichtflächen 23, 24, 25 auf, die zur Abdichtung von ersten, zweiten und dritten Dichtzonen 26, 27, 28 der Schutzkappe dienen, die am Anschlußstück 3 und an der Innenseite und an der der Auflagefläche 20 gegenüberliegenden Seitenfläche des Befestigungswulstes 2 angeordnet sind. In Fig. 8 sind der Befestigungswulst 2 und das Anschlußstück 3 im entspannten Zustand dargestellt, so daß die Dichtzonen 26 bis 28 jeweils etwas über die Dichtflächen 23, 24, 25 überstehend eingezeichnet sind, wobei die Dichtzonen 26, 27, 28 im geschlossenen Zustand des Prüfadapters 8 um diese Überstände s verpreßt werden.

Die Druckluftzufuhrleitung 16 weist Zweige 29, 30 auf, wobei die Zweige 29 in den zwischen dem Balg 1 und dem Adapterstempel 11 liegenden Raum 31 münden, der von den an den ersten und dritten Dichtflächen 23, 25 anliegenden ersten und dritten Dichtzonen 26, 28 begrenzt wird. Die Anlagefläche 20 des Adapterunterteils 9 für die in Fig. 8 unten liegende Seitenfläche des Befestigungswulstes 2 stellt eine vierte Dichtfläche dar und die an der Anlagefläche 20 anliegende Seitenwand der Befestigungswulst 2 bildet eine vierte Dichtzone 32 (in Fig. 8 im unverpressten Zustand mit Überstand s dargestellt). Der Zweig 30 der Druckluftzufuhrleitung 16 mündet in den zwischen dem Adapterstempel 11, dem Adapterunterteil 9 und der Befestigungswulst 2 liegenden Raum 35, der von der an der zweiten Dichtfläche 24 anliegenden zweiten Dichtzone 27 und von der an der Anlagefläche 20 anliegenden vierten Dichtzone 32 abgedichtet wird.

Weiters führen Verbindungsleitungen 33 in den zwischen dem Adapterstempel 11 und dem Befestigungswulst 2 liegenden Raum 34, der von der an der zweiten Dichtfläche 24 anliegenden zweiten Dichtzone 27 und der an der dritten Dichtfläche 25 anliegenden dritten Dichtzone 28 abgedichtet wird. Diese Verbindungsleitungen 33 verbinden den Raum 34 mit dem Umgebungsdruck.

Nach öffnen des Ventils 18 ist somit in den Raum 31 und in den Raum 35 ein Überdruck U eingebracht, während der Druck im Raum 34 dem Umgebungsdruck T entspricht. Auch auf der dem Raum 31 gegenüberliegenden Seite des Balges 1 (Raum 36) herrscht Umgebungsdruck. Nach Schließen des Ventils 18 werden somit über den vom Druckaufnehmer 19 aufgenommenen Druckverlauf alle vier Dichtungszonen 26, 27, 28 und 32 der Schutzkappe gleichzeitig geprüft.

Die dritte Dichtfläche 25 verläuft winkelig zu den im wesentlichen parallel (d. h. im Bereich von +/- 10° zur Parallelen) zur Längsachse 14 stehenden Dichtflächen 23 und 24. Der Winkel zwischen der zweiten Dichtfläche 24 und der dritten Dichtfläche 25 kann beispielsweise im Bereich zwischen 80 und 120°, vorzugsweise im Bereich zwischen 90 und 100° liegen. Ein etwas größerer Winkel als 90° simuliert hierbei eine etwas schräg zum Nutgrund verlaufende Seitenflanke der Ringnut 4.

Um ein Abrutschen des Befestigungswulstes 2 von der Auflagefläche 20 zu verhindern (insbesondere bei einem Winkel größer als 90° zwischen den Dichtflächen 24, 25), kann die Auflagefläche 20 mit einer umlaufenden, die Seitenwand des Befestigungswulstes 2 aufnehmenden Mulde versehen sein.

Falls keine Prüfung der vierten Dichtzone 32 erforderlich ist, könnte der Raum 36 bei der Prüfung ebenfalls auf Überdruck gebracht sein, wobei in diesem Fall eine Abdichtung des Raums 36 gegenüber der Umgebung vorzusehen wäre, beispielsweise durch eine entsprechende Abdichtung des Adapterstempels 11 gegenüber dem Adapterunterteil 9 in einem Bereich außerhalb des Raumes 36.

Um beim Öffnen des Adapterstempels 11 ein Anhaften der Schutzkappe am Adapterstempel 11 zu verhindern, ist in bekannter Weise ein federbelasteter Abstreifring 37 vorgesehen, der im entlasteten Zustand die Stellung entsprechend Fig. 4 einnimmt.

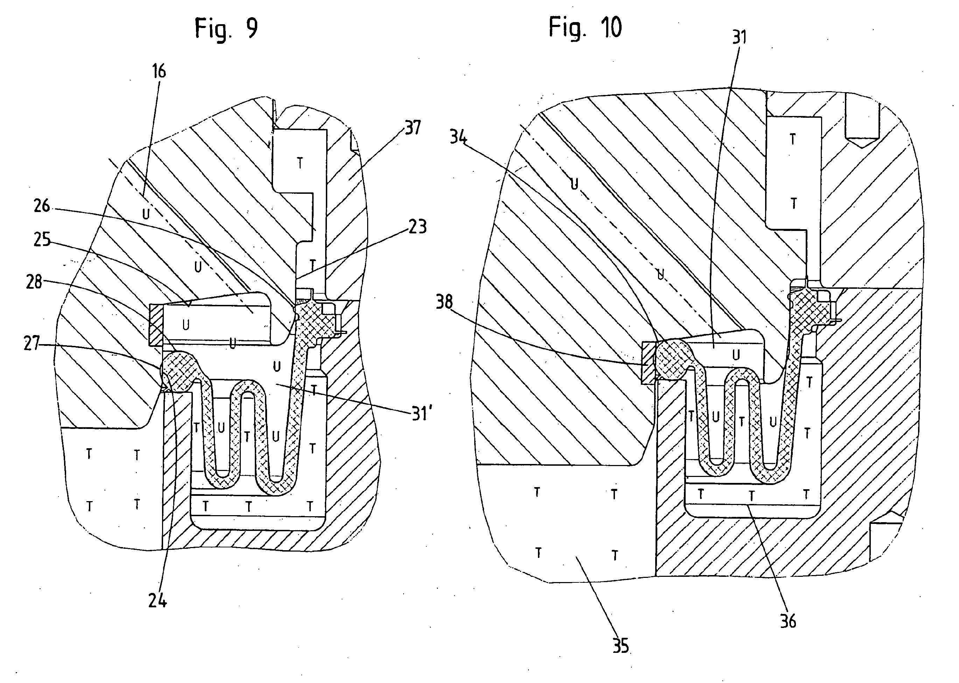

Die Fig. 9 und 10 zeigen ein Ausführungsbeispiel, bei welchem die Prüfung der Schutzkappe zweistufig erfolgt. Die erste Prüfstellung ist in Fig. 9 dargestellt. Hier liegt die zweite Dichtzone 27 an der zweiten Dichtfläche 24 an. Die erste Dichtzone 26 liegt an der sich bei diesem Ausführungsbeispiel über einen größeren achsialen Bereich erstreckenden ersten Dichtfläche 23 an. Die dritte Dichtzone 28 ist aber von der zugehörigen dritten Dichtfläche 25 beabstandet. Der Zweig 30 der Druckluftzufuhrleitung 16 entfällt bei diesem Ausführungsbeispiel. In dieser Dichtstellung wird ein Überdruck in den von den ersten und zweiten Dichtzonen 26, 27 begrenzten Raum 31' eingebracht, so daß in dieser Prüfstellung die erste Dichtzone 26 und die zweite Dichtzone 27 geprüft werden können.

In der Folge wird der Adapterstempel 11 weiter eingefahren, bis er die in Fig. 10 dargestellte zweite Prüfstellung einnimmt. Hier liegt die dritte Dichtzone 28 an der dritten Dichtfläche 25 an. Die zweite Dichtzone 27 liegt an einem Teil der Außenwand 22 des Adapterstempels 11 an, der von der Außenfläche eines Rings aus einem porösen, stark luftdurchlässigen Material gebildet wird. Der Raum 34 steht dadurch mit Umgebungsdruck T in Verbindung. Dieser Ring aus dem porösen Material bildet somit eine in den Raum 34 mündende Verbindungsleitung 38. Durch Einbringen von Überdruck U in den Raum 31 kann auf diese Weise in dieser zweiten Prüfstellung zusätzlich die dritte Dichtzone 28 geprüft werden.

Anstelle von einem Ring aus einem porösen Material könnte die Außenwand 22 in diesem Bereich auch von einem ein mit Bohrungen versehenes siebartiges Teil gebildet werden, unterhalb von welchem sich ein Hohlraum befindet. Auch könnten eine oder mehrere Leitungen in Form von am Adapterstempel 11 verlaufenden Kanälen vorgesehen sein, die zwischen dem Raum 34 und einem dem Anlagebereich der zweiten Dichtzone 27 an der Außenwand 22 benachbarten und außerhalb des Raums 34 liegenden Abschnitt der Außenwand 22 (der oberhalb der zweiten Dichtfläche 24 liegt) verlaufen. Auch wären analog zu den Verbindungsleitungen 33 im zuvor beschriebenen Ausführungsbeispiel verlaufende Verbindungsleitungen 33 denkbar und möglich, wobei in diesem Fall ein verschließbares Ventil für jede der Verbindungsleitungen 33 vorzusehen wäre, welches in der ersten Prüfstellung entsprechend Fig. 9 geschlossen wird.

### Legende zu den Hinweisziffern:

- 1: Balg
- 2: Befestigungswulst
- 3: Anschlußstück
- 4: Ringnut
- 5: Kolben
- 6: Zylindergehäuse
- 7: Klemmring
- 8: Prüfadapter
- 9: Adapterunterteil
- 10: Aufnahme
- 11: Adapterstempel
- 12: Anschlußstück
- 13: Führungsteil
- 14: Längsachse
- 15: Pfeil
- 16: Druckluftzufuhrleitung
- 17: Reservoir
- 18: Ventil
- 19: Druckaufnehmer
- 20: Auflagefläche
- 21: Auflagefläche
- 22: Außenwand
- 23: erste Dichtfläche
- 24: zweite Dichtfläche
- 25: dritte Dichtfläche
- 26: erste Dichtzone
- 27: zweite Dichtzone
- 28: dritte Dichtzone
- 29: Zweig
- 30: Zweig
- 31,31': Raum
- 32: vierte Dichtzone
- 33: Verbindungsleitung
- 34: Raum
- 35: Raum
- 36: Raum
- 37: Abstreifring
- 38: Verbindungsleitung

## Patentansprüche

1. Prüfeinrichtung zur automatisierten Prüfung von Schutzkappen für Bremszylinder von Scheibenbremsen, wobei die Schutzkappe einen Balg (1), einen in einer Ringnut (4) im Kolben (5) des Bremszylinders eingreifenden Befestigungswulst (2) an einem ersten Ende des Balgs und ein am zweiten Ende des Balgs angeordnetes Anschlußstück (3) zur Festlegung der Schutzkappe am Zylindergehäuse (6) besitzt und wobei die Prüfeinrichtung einen Prüfadapter (8) mit einem Adapterunterteil (9) zum Einlegen der Schutzkappe und einen in das Adapterunterteil (9) mit der darin eingelegten Schutzkappe einfahrbaren Adapterstempel (11) aufweist, der eine Außenwand (22) mit einer an eine erste am Anschlußstück (3) angeordnete Dichtzone (26) anlegbaren ersten Dichtfläche (23) und einer an eine an der Innenseite des ringförmigen Befestigungswulstes (2) angeordneten zweiten Dichtzone (27) anlegbaren zweiten Dichtfläche (24) besitzt, und zur Dichtigkeitsprüfung der Dichtzonen (26, 27) mittels einer Druckluftzufuhrleitung (16) eine Druckdifferenz zwischen den Räumen aufbringbar ist, welche an beiden Seiten einer jeweiligen an einer der Dichtflächen (23, 24) anliegenden Dichtzone (26, 27) an diese angrenzen, **dadurch gekennzeichnet, daß** eine dritte, winkelig zu den ersten und zweiten Dichtflächen (23, 24) stehende Dichtfläche (25) der Außenwand (22) des Adapterstempels (11) an einer an der Seitenfläche der Befestigungswulst (2), die der auf dem Adapterunterteil (9) aufliegenden Seitenfläche gegenüberliegt, angeordneten dritten Dichtzone (28) anlegbar ist und eine Verbindungsleitung (33, 38) in den Raum (34) führt, der von den am Befestigungswulst (2) angeordneten an der Außenwand (22) des Adapterstempels (11) anliegenden zweiten und dritten Dichtzonen (27, 28) begrenzt wird.

2. Prüfeinrichtung nach Anspruch 1, **dadurch gekennzeichnet, daß** die am Anschlußstück (3) angeordnete erste Dichtzone (26) und die am Befestigungswulst (2) angeordneten zweiten und dritten Dichtzonen (27, 28) bei in das Adapterunterteil (9) eingefahrenem Adapterstempel (11) gleichzeitig an den zugehörigen Dichtflächen (23, 24, 25) anliegen.

3. Prüfeinrichtung nach Anspruch 2, **dadurch gekennzeichnet, daß** die Auflagefläche (20) des Adapterunterteils (9) für die Seitenwand des Befestigungswulsts (2) eine vierte Dichtfläche bildet und die an der vierten Dichtfläche anliegende Seitenfläche des Befestigungswulstes (2) eine vierte Dichtzone (32) darstellt.

4. Prüfeinrichtung nach Anspruch 3, **dadurch gekennzeichnet, daß** im Raum (31), der zwischen dem Adapterstempel (11) und dem Balg (1) liegt und von der ersten und der dritten Dichtzone (26, 28) begrenzt ist, mittels der Druckluftzufuhrleitung (16) ein Überdruck (U) einbringbar ist.

5. Prüfeinrichtung nach Anspruch 4, **dadurch gekennzeichnet, daß** in den von der zweiten und dritten Dichtzone (27, 28) begrenzten Raum (34) durch die in diesen Raum (34) mündende Leitung Umgebungsdruck (T) einbringbar ist.

6. Prüfeinrichtung nach Anspruch 5, **dadurch gekennzeichnet, daß** im zwischen dem Adapterstempel (11) und dem Adapterunterteil (9) liegenden und von der zweiten und von der vierten Dichtzone (27, 32) begrenzten Raum (35) mittels eines Zweiges (30) der Druckluftzufuhrleitung (16) ein Überdruck (U) einbringbar ist.

7. Prüfeinrichtung nach Anspruch 6, **dadurch gekennzeichnet, daß** auf der vom Raum (31), der von der ersten und von der dritten Dichtzone (26, 28) begrenzt ist, abgewandten Seite des Balges (1) Umgebungsdruck (T) herrscht.

8. Prüfeinrichtung nach Anspruch 1, **dadurch gekennzeichnet, daß** der Adapterstempel (11) zwei Prüfstellungen aufweist, wobei in einer ersten Prüfstellung des Adapterstempels (11) die an der Innenseite des Befestigungswulstes (2) angeordnete zweite Dichtzone (27) an der zweiten Dichtfläche (24) anliegt, während die dritte Dichtzone (28) von der dritten Dichtfläche (25) beabstandet ist und in einer zweiten Prüfstellung des Adapterstempels (11) die dritte Dichtzone (28) an der dritten Dichtfläche (25) anliegt.

9. Prüfeinrichtung nach Anspruch 8, **dadurch gekennzeichnet, daß** in der ersten Prüfstellung die Verbindungsleitung (38) beidseitig innerhalb des Raums (31') mündet, der von den ersten und zweiten Dichtzonen (26, 27) begrenzt wird, welche an den ersten und zweiten Dichtflächen (23, 24) anliegen, und in der zweiten Prüfstellung die Verbindungsleitung (38) einerseits in den von den zweiten und dritten Dichtzonen (27, 28) begrenzten Raum (34) und andererseits in einen in dieser zweiten Prüfstellung Umgebungsdruck aufweisenden Raum (35) mündet.

10. Prüfeinrichtung nach Anspruch 8, **dadurch gekennzeichnet, daß** die Verbindungsleitung (33) verschießbar ist.

11. Prüfeinrichtung nach einem der Ansprüche 8 bis 10, **dadurch gekennzeichnet, daß** in der ersten Prüfstellung im Raum (31') ein Überdruck (U) eingebracht ist.

12. Prüfeinrichtung nach Anspruch 11, **dadurch gekennzeichnet, daß** in der zweiten Prüfstellung im Raum (31) ein Überdruck (U) eingebracht ist und der Raum (34) auf Umgebungsdruck (T) liegt.

13. Prüfeinrichtung nach einem der Ansprüche 1 bis 12, **dadurch gekennzeichnet, daß** der Winkel zwischen der zweiten Dichtfläche (24) und der dritten Dichtfläche (25) im Bereich zwischen 80 und 110°, vorzugsweise im Bereich zwischen 90 und 100° liegt.

## Claims

1. Testing device for automated testing of protection caps of brake cylinders of disc brakes, the protection cap having a bellows (1), a fixing bead (2) engaging an annular groove (4) in the piston (5) of the brake cylinder and present at a first end of the bellows, and a connecting piece (3) arranged at the second end of the bellows and intended for fixing the protection cap on the cylinder housing (6), and the testing device having a test adaptor (8) with a bottom adapter part (9) for inserting the protection cap and an adaptor plunger (11) which can be moved into the bottom adaptor part (9) with the protection cap inserted therein and which has an outer wall (22) with a first sealing surface (23) which can be applied to a first sealing zone (26) arranged at the connecting piece (3) and a second sealing surface (24) which can be applied to a second sealing zone (27) arranged on the inside of the annular fixing bead (2), and, for leak testing of the sealing zones (26, 27), it is possible to apply, by means of a compressed air feed line (16), a pressure difference between the spaces which are adjacent to the two sides of a respective sealing zone (26, 27) adjacent to one of the sealing surfaces (23, 24) **characterized in that** a third sealing surface (25) of the outer wall (22) of the adaptor plunger (11), at an angle to the first and second sealing surface (23, 24) can be applied to a third sealing zone (28) arranged at the lateral surface of the fixing bead (2) which is opposite the lateral surface resting on the bottom adaptor part (9), and a connecting line (33, 38) leads into the space (34) which is bounded by the second and third sealing zones (27, 28) arranged at the fixing bead (2) and adjacent to the outer wall (22) of the adaptor plunger (11).

2. Testing device according to Claim 1, **characterized in that** the first sealing zone (26) arranged at the connecting piece (3) and the second and third sealing zones (27, 28) arranged at the fixing bead (2) simultaneously rest against the associated sealing surfaces (23, 24, 25) when the adaptor plunger (11) is moved into the bottom adapter part (9).

3. Testing device according to Claim 2, **characterized in that** the contact surface (20) of the bottom adapter part (9) forms a fourth sealing surface for the lateral wall of the fixing bead (2), and that lateral surface of the fixing bead (2) which is adjacent to the fourth sealing surface represents a fourth sealing zone (32).

4. Testing device according to Claim 3, **characterized in that** an excess pressure (U) can be introduced by means of the compressed air feed line (16) in the space (31) which is located between the adapter plunger (11) and the bellows (1) and is bounded by the first and the third sealing zones (26, 28).

5. Testing device according to Claim 4, **characterized in that** ambient pressure (T) can be introduced into the space (34) bounded by the second and third sealing zones (27, 28) through the line opening into the space (34).

6. Testing device according to Claim 5, **characterized in that** an excess pressure (U) can be introduced by means of a branch (30) of the compressed air feed line (16) in the space (35) located between the adapter plunger (11) and the bottom adapter part (9) and bounded by the second and by the fourth sealing zones (27, 32).

7. Testing device according to Claim 6, **characterized in that** ambient pressure (T) prevails on that side of the bellows (1) which faces away from the space (31) which is bounded by the first and by the third sealing zones (26, 28).

8. Testing device according to Claim 1, **characterized in that** the adapter plunger (11) has two test positions, the second sealing zone (27) arranged on the inside of the fixing bead (2) resting against the second sealing surface (24), while the third sealing zone (28) is a distance away from the third sealing surface (25), in a first test position of the adapter plunger (11), and the third sealing zone (28) resting against the third sealing surface (25) in a second test position of the adapter plunger (11).

9. Testing device according to Claim 8, **characterized in that**, in the first test position, the connecting line (38) opens on both sides within the space (31') which is bounded by the first and second sealing zones (26, 27) which rest against the first and second sealing surfaces (23, 24), and, in the second test position, the connecting line (38) opens in the one hand into the space (34) bounded by the second and third sealing zones (27, 28) and, on the other hand, into a space (35) which is at ambient pressure in the second test position.

10. Testing device according to Claim 8, **characterized in that** the connecting line can be closed.

11. Testing device according to any of Claims 8 to 10, **characterized in that** an excess pressure (U) is introduced in the space (31') in the first test position.

12. Testing device according to Claim 11, **characterized in that**, in the second test position, an excess pressure (U) is introduced in the space (31), and the space (34) is at ambient pressure (T).

13. Testing device according to any of Claims 1 to 12, **characterized in that** the angle between the second sealing surface (24) and the third sealing surface (25) is in the range between 80 and 110°, preferably in the range between 90 and 100°.

## Revendications

1. Dispositif d'essai destiné à tester automatiquement les capots de protection des cylindres des freins à disque, selon lequel
le capot de protection possède un soufflet (1), un bourrelet de fixation (2) à une première extrémité du soufflet s'engageant dans une rainure annulaire (4) du piston (5) du cylindre de frein et un élément de raccordement (3) agencé à la deuxième extrémité du soufflet destiné à la fixation du capot de protection au logement de cylindre (6) et
le dispositif d'essai présente un adaptateur d'essai (8) comportant une partie inférieure d'adaptateur (9) permettant l'insertion du capot de protection et un piston d'adaptateur (11) pouvant être inséré dans la partie inférieure d'adaptateur (9) avec le capot de protection introduit dans celle-ci, ayant une paroi externe (22) comportant une première surface d'étanchéité (23) pouvant être placée contre une première zone d'étanchéité (26) agencée sur l'élément de raccordement (3) et une deuxième surface d'étanchéité (24) pouvant être placée contre une deuxième zone d'étanchéité (27) de la face intérieure du bourrelet de fixation circulaire (2), et une différence de pression peut être appliquée par une conduite d'amenée d'air comprimé (16) pour vérifier l'étanchéité des zones d'étanchéité (26, 27) entre les espaces, adjacents de chacune des deux faces d'une zone d'étanchéité (26, 27) adjacente à l'une des surfaces d'étanchéité (23, 24),
**caractérisé en ce qu'**
une troisième surface d'étanchéité (25) de la paroi externe (22) du piston d'adaptateur (11), angulaire aux première et deuxième surfaces d'étanchéité (23, 24), peut être placée contre une troisième zone d'étanchéité (28), de la face latérale du bourrelet de fixation (2) opposé à la face latérale s'appuyant sur la partie inférieure d'adaptateur (9) et, une conduite de raccordement (33, 38) débouche dans l'espace (34) délimité par les deuxième et troisième zones d'étanchéité (27, 28) adjacentes agencées contre le bourrelet de fixation (2) sur la paroi externe (22) du piston d'adaptateur (11).

2. Dispositif d'essai selon la revendication 1,
**caractérisé en ce que**
la première zone d'étanchéité (26), sur l'élément de raccordement (3), et les deuxième et troisième zones d'étanchéité (27, 28) sur le bourrelet de fixation (2) sont adjacentes simultanément aux surfaces d'étanchéité associées (23, 24, 25) lorsque le piston d'adaptateur (11) est inséré dans la partie inférieure d'adaptateur (9).

3. Dispositif d'essai selon la revendication 2,
**caractérisé en ce que**
la surface d'appui (20) de la partie inférieure d'adaptateur (9) forme une quatrième surface d'étanchéité pour la paroi latérale du bourrelet de fixation (2) et la face latérale du bourrelet de fixation (2) adjacente à la quatrième surface d'étanchéité représente une quatrième zone d'étanchéité (32).

4. Dispositif d'essai selon la revendication 3,
**caractérisé en ce qu'**
une surpression (U) peut être introduite à l'aide de la conduite d'amenée d'air comprimé (16) dans l'espace (31) délimité par les première et troisième zones d'étanchéité (26, 28), entre le piston d'adaptateur (11) et le soufflet (1).

5. Dispositif d'essai selon la revendication 4,
**caractérisé en ce qu'**
une pression ambiante (T) peut être introduite dans l'espace délimité (34) entre les deuxième et troisième zones d'étanchéité (27, 28) par la conduite débouchant dans cet espace (34).

6. Dispositif d'essai selon la revendication 5,
**caractérisé en ce qu'**
une surpression (U) peut être introduite dans l'espace (35) délimité par les deuxième et quatrième zones d'étanchéité (27, 32) entre le piston d'adaptateur (11) et la partie inférieure d'adaptateur (9) à l'aide d'une branche (30) de la conduite d'amenée d'air comprimé (16).

7. Dispositif d'essai selon la revendication 6,
**caractérisé en ce qu'**
une pression ambiante (T) règne sur la face du soufflet (1) opposée à l'espace (31) délimité par les première et troisième zones d'étanchéité (26, 28).

8. Dispositif d'essai selon la revendication 1,
**caractérisé en ce que**
le piston d'adaptateur (11) présente deux positions d'essai, la deuxième zone d'étanchéité (27) de la face intérieure du bourrelet de fixation (2) étant adjacente à la deuxième surface d'étanchéité (24) dans une première position d'essai du piston d'adaptateur (11), tandis que la troisième zone d'étanchéité (28) est à distance de la troisième surface d'étanchéité (25) et la troisième zone d'étanchéité (28) est adjacente à la troisième surface d'étanchéité (25) dans une deuxième position d'essai du piston d'adaptateur (11).

9. Dispositif d'essai selon la revendication 8,
**caractérisé en ce que**
dans la première position d'essai, la conduite de raccordement (38) débouche des deux côtés à l'intérieur de l'espace (31') délimité par les première et deuxième zones d'étanchéité (26, 27), adjacentes aux première et deuxième surfaces d'étanchéité (23, 24) et, dans la deuxième position d'essai, la conduite de raccordement (38) débouche d'une part dans l'espace (34) délimité par les deuxième et troisième zones d'étanchéité (27, 28) et d'autre part dans un espace (35) présentant une pression ambiante dans cette deuxième position d'essai.

10. Dispositif d'essai selon la revendication 8,
**caractérisé par**
une conduite de raccordement verrouillée.

11. Dispositif d'essai selon l'une des revendications 8 à 10,
**caractérisé en ce qu'**
une surpression (U) est introduite dans l'espace (31') dans la première position d'essai.

12. Dispositif d'essai selon la revendication 11,
**caractérisé en ce qu'**
une surpression (U) est introduite dans l'espace (31) dans la deuxième position d'essai et l'espace (34) est à la pression ambiante (T).

13. Dispositif d'essai selon l'une des revendications 1 à 12,
**caractérisé en ce que**
l'angle entre la deuxième surface d'étanchéité (24) et la troisième surface d'étanchéité (25) se situe dans la plage entre 80° et 110°, de préférence dans la plage entre 90° et 100°.
